# EUROPEAN PATENT APPLICATION

(11) **EP 4 120 185 A1**
(43) Date of publication of application: **18.01.2023**
(21) Application number: 20924840.0
(22) Date of filing: 12.03.2020
(51) Int. Cl.: G06T 7/00

(54) **IMAGE PROCESSING DEVICE, IMAGE RECOGNITION SYSTEM, IMAGE PROCESSING METHOD, AND NON-TRANSITORY COMPUTER-READABLE MEDIUM**

(71) Applicant: NEC Corporation, 108-8001 Tokyo (JP)
(72) Inventor: MIYAMOTO Takaya, Tokyo 108-8001 (JP)
(74) Representative: Betten & Resch
(86) International application number: PCT/JP2020/010908
(87) International publication number: WO 2021/181627

(57) **Abstract**

An image processing apparatus (10) includes: an intermediate acquisition unit (100) that acquires feature amount maps representing a feature of an image; a preprocessing unit (102) that performs a weighting calculation regarding a pixel value on each of the acquired feature amount maps and calculates a statistical value of the weighted pixel value for each of the feature amount maps; an attention weight prediction unit (104) that predicts an attention weight indicating an importance level of each for the feature amount maps from the statistical value of the pixel value corresponding to each of the feature amount maps; and an attention weighting unit (106) that performs weighting on each of the acquired feature amount maps by using the attention weight.

## Description

### Technical Field

The present disclosure relates to an image processing apparatus, an image recognition system, an image processing method, and a non-transitory computer-readable medium.

### Background Art

An image recognition system is known that uses a convolutional neural network (CNN) to generate a feature amount map obtained by features of a target image being extracted and recognizes a subject from the feature amount map. Patent Literatures 1 and 2 disclose a method of recognizing a subject by using a feature amount map in which an unnecessary region is deleted from an intermediate feature amount map. Further, a technique is known in Non Patent Literature 1 in which an attention mechanism is used to predict an attention weight according to an importance level of each intermediate feature amount map and each intermediate feature amount map is weighted with the attention weight.

### Citation List

### Patent Literature

Patent Literature 1: Japanese Unexamined Patent Application Publication No. 2020-008896
Patent Literature 2: Japanese Unexamined Patent Application Publication No. 2019-096006

### Non Patent Literature

Non Patent Literature 1: J. Hu, L. Shen, S. Albanie, G. Sun, E. Wu, "Squeeze- and-Excitation Networks", Computer Vision and Pattern Recognition, submitted on September 5, 2017

### Summary of Invention

### Technical Problem

An object of the present disclosure is to improve relevant techniques.

### Solution to Problem

An image processing apparatus according to one aspect of the present disclosure includes: an intermediate acquisition unit that acquires feature amount maps representing a feature of an image; a preprocessing unit that performs a weighting calculation regarding a pixel value on each of the acquired feature amount maps and calculates a statistical value of the weighted pixel value for each of the feature amount maps; an attention weight prediction unit that predicts an attention weight indicating an importance level for each of the feature amount maps from the statistical value of the pixel value corresponding to each of the feature amount maps; and an attention weighting unit that performs weighting on each of the acquired feature amount maps by using the attention weight.

An image recognition system according to one aspect of the present disclosure includes: an image processing apparatus including: an intermediate acquisition unit that acquires feature amount maps representing a feature of an image; a preprocessing unit that performs a weighting calculation regarding a pixel value on each of the acquired feature amount maps and calculates a statistical value of the weighted pixel value for each of the feature amount maps; an attention weight prediction unit that predicts an attention weight indicating an importance level for each of the feature amount maps from the statistical value of the pixel value corresponding to each of the feature amount maps; and an attention weighting unit that performs weighting on each of the feature amount maps acquired by the intermediate acquisition unit by using the attention weight; and a recognition apparatus that recognizes a subject in the image by using information based on the weighted feature amount maps by a learned recognition model.

An image processing method according to one aspect of the present disclosure includes steps of: acquiring feature amount maps representing a feature of an image; performing a weighting calculation regarding a pixel value on each of the acquired feature amount maps and calculating a statistical value of the weighted pixel value for each of the feature amount maps; predicting an attention weight indicating an importance level for each of the feature amount maps from the statistical value of the pixel value corresponding to each of the feature amount maps; and performing weighting on each of the acquired feature amount maps by using the attention weight.

A non-transitory computer-readable medium according to one aspect of the present disclosure stores an image processing program for causing a computer to realize: an intermediate acquisition function to acquire feature amount maps representing a feature of an image; a preprocessing function to perform a weighting calculation regarding a pixel value on each of the acquired feature amount maps and to calculate a statistical value of the weighted pixel value for each of the feature amount maps; an attention weight prediction function to predict an attention weight indicating an importance level for each of the feature amount maps from the statistical value of the pixel value corresponding to each of the feature amount maps; and an attention weighting function to perform weighting on each of the acquired feature amount maps by using the attention weight.

### Brief Description of Drawings

Fig. 1 is a block diagram showing a configuration of an image processing apparatus according to a first example embodiment;
Fig. 2 is a schematic configuration diagram showing an example of an image recognition system to which an image processing apparatus according to a second example embodiment is applied;
Fig. 3 is a diagram showing an example of a configuration of a feature transformation unit according to the second example embodiment;
Fig. 4 is a diagram for describing processing of an attention mechanism unit according to the second example embodiment;
Fig. 5 is a block diagram showing a configuration of the attention mechanism unit according to the second example embodiment;
Fig. 6 is a flowchart showing processing of an image recognition system according to the second example embodiment;
Fig. 7 is a flowchart showing attention mechanism processing of the attention mechanism unit according to the second example embodiment;
Fig. 8 is a flowchart showing a learning process of a learning apparatus according to the second example embodiment;
Fig. 9A is a view showing an example of an extraction filter F according to a third example embodiment;
Fig. 9B is a view showing an example of an extraction filter F according to the third example embodiment;
Fig. 9C is a view showing an example of an extraction filter F according to the third example embodiment;
Fig. 10 is a view showing an example of an extraction filter F according to a fourth example embodiment;
Fig. 11 is a block diagram showing a configuration of an attention mechanism unit according to a fifth example embodiment;
Fig. 12 is a flowchart showing attention mechanism processing of the attention mechanism unit according to the fifth example embodiment; and
Fig. 13 is a schematic configuration view of a computer according to the first to fifth example embodiments.

### Example Embodiment

### (First Example Embodiment)

Hereinafter, a first example embodiment of the present disclosure will be described with reference to the drawings. In each drawing, the same or corresponding elements are denoted by the same reference numerals, and will not be described repeatedly as necessary for the sake of clarify of description.

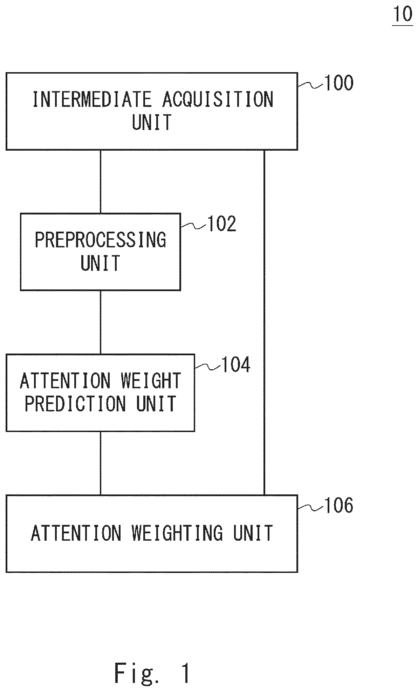

Fig. 1 is a block diagram showing a configuration of an image processing apparatus 10 according to the first example embodiment. The image processing apparatus 10 includes an intermediate acquisition unit 100, a preprocessing unit 102, an attention weight prediction unit 104, and an attention weighting unit 106.

The intermediate acquisition unit 100 acquires feature amount maps representing features of an image.

The preprocessing unit 102 performs a weighting calculation on a pixel value for each of the acquired feature amount maps, and calculates a statistical value of the weighted pixel value for each of the feature amount maps.

The attention weight prediction unit 104 predicts an attention weight indicating an importance level for each of the feature amount maps from the statistical value of the pixel value corresponding to each of the feature amount maps.

The attention weighting unit 106 performs weighting on each of the feature amount maps acquired by the intermediate acquisition unit by using the attention weight.

In the method disclosed in Patent Literature 1 described above, there is a problem that an activation map for each class is generated in order to generate feature amount maps in which an unnecessary region is deleted and thus calculation costs are high.

In the method disclosed in Patent Literature 2 described above, there is a problem that an influence of regions other than a region of interest is excessively excluded in order to extract a detailed feature amount for the region of interest and recognition accuracy is insufficient.

Further, in the method disclosed in Non Patent Literature 1 described above, there is a problem that, during prediction of an attention weight, a feature of a region to be considered at the time of recognition and a feature including an unnecessary region such as a background are treated equally, and thus recognition accuracy is insufficient.

However, according to the configuration of the first example embodiment, the image processing apparatus 10 performs a weighting calculation for the pixel value on each of the feature amount maps before predicting the attention weight. Thus, it is possible to generate a feature amount map with high accuracy while preventing an increase in calculation costs of attention weight prediction processing. As a result, it is possible to improve recognition accuracy while preventing an increase in calculation costs of subsequent recognition processing.

### (Second Example Embodiment)

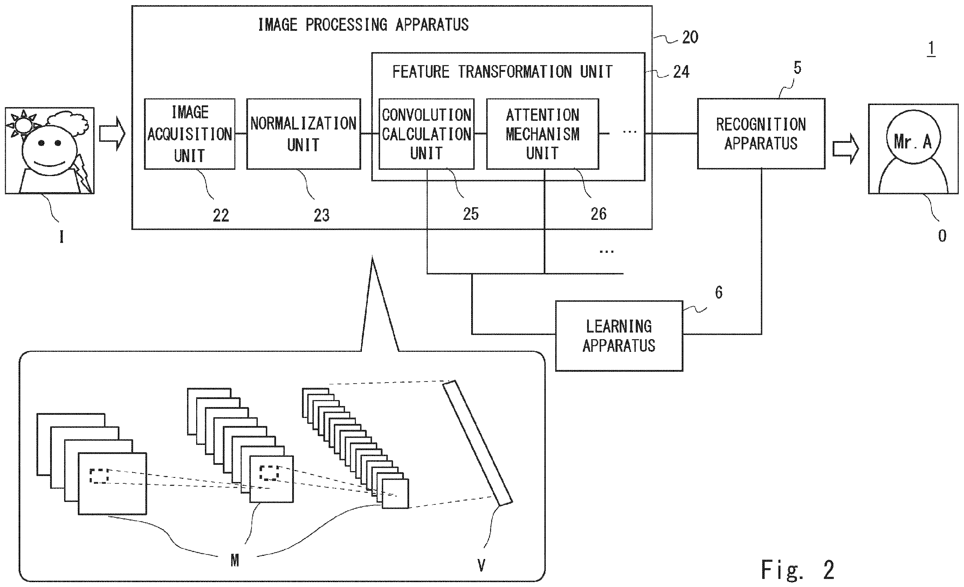

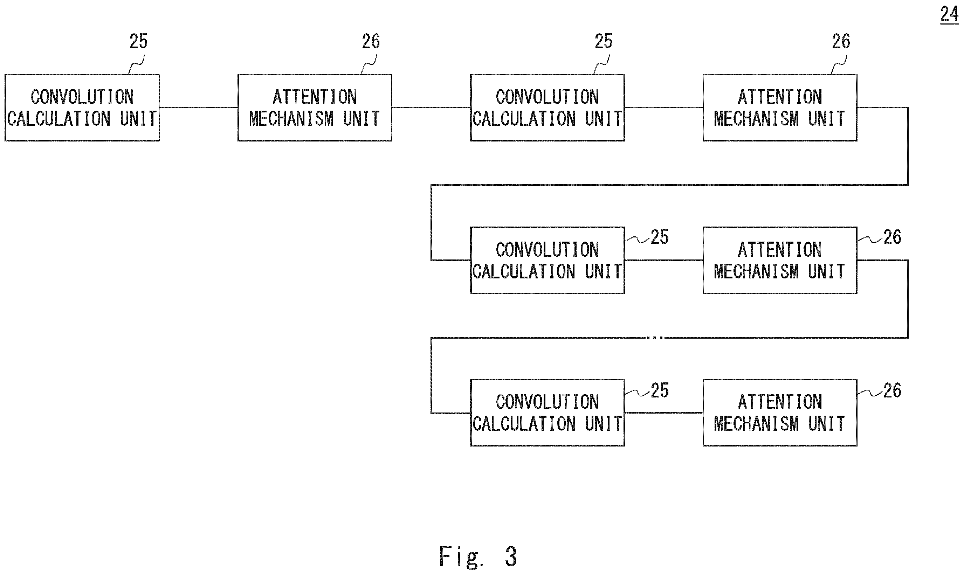

A second example embodiment of the present disclosure will be described below with reference to Figs. 2 to 9. Fig. 2 is a schematic configuration diagram showing an example of an image recognition system 1 to which an image processing apparatus 20 according to the second example embodiment can be applied. Further, Fig. 3 is a diagram showing an example of a configuration of a feature transformation unit 24 according to the second example embodiment.

The image recognition system 1 is, for example, a computer that recognizes a subject included in an input image I. As an example, the subject includes a person, a vehicle, or an animal and the like. In the present second example embodiment, the subject is a face of a person. As shown in Fig. 2, the image recognition system 1 includes an image processing apparatus 20, a recognition apparatus 5, and a learning apparatus 6.

The image processing apparatus 20 is, for example, a computer that generates a feature amount vector V from the input image I and outputs the feature amount vector V to the recognition apparatus 5. The feature amount vector V is that a feature for each region of the input image I is represented by a vector. The image processing apparatus 20 includes an image acquisition unit 22, a normalization unit 23, and a feature transformation unit 24.

The image acquisition unit 22 acquires the input image I. The image acquisition unit 22 outputs the acquired input image I to the normalization unit 23.

The normalization unit 23 generates a normalized image in which a subject is normalized based on a position of the subject included in the input image I. The normalized image may include a peripheral region other than the subject. The normalization unit 23 outputs the normalized image to a convolution calculation unit 25 of the feature transformation unit 24.

The feature transformation unit 24 generates feature amount maps M in which features of the input image I are extracted from the normalized image, and generates a feature amount vector V based on the feature amount maps M. Here, each of the feature amount maps M is a matrix representing an intensity of reaction (that is, feature amount) to a kernel (filter) used in feature transformation processing including convolution calculation processing and attention mechanism processing, which will be described below, for each region of the input image I. In other words, each of the feature amount maps M represents the features of the input image I. The feature transformation unit 24 outputs the generated feature amount vector V to the recognition apparatus 5.

Here, the feature transformation unit 24 has a function such as a convolutional layer or a fully connected layer included in a neural network such as a convolutional neural network learned by machining learning such as deep learning. The feature transformation unit 24 includes a convolution calculation unit 25 and an attention mechanism unit 26.

The convolution calculation unit 25 performs a convolution calculation on the input image I using the learned parameters to extract the features of the input image I, and generates one or a plurality of feature amount maps M. In addition, the convolution calculation may include a pooling calculation. The convolution calculation unit 25 outputs the generated feature amount map M to the attention mechanism unit 26.

The attention mechanism unit 26 uses an attention mechanism algorithm to generate, for each of the feature amount maps M output from the convolution calculation unit 25, a feature amount map M weighted with an attention weight corresponding to the feature amount map M. Here, the attention mechanism algorithm is an algorithm that calculates an attention weight for each of the plurality of feature amount maps M and is weighted, for each of the feature amount maps M, with the attention weight corresponding to the feature amount map M. The attention weight is a weight indicating an importance level for each of the feature amount maps M output from the convolution calculation unit 25. The attention weight is different from a weight of each pixel of the kernel used in the convolution calculation in terms of being a macroscopic weight that selects or weights the feature amount map M according to the importance level of the feature amount map M. The attention mechanism unit 26 outputs the weighted feature amount map M to a subsequent element.

Further, the feature transformation unit 24 has a configuration in which a plurality of sets of the convolution calculation unit 25 and the attention mechanism unit 26 are connected in series as shown in Fig. 3. Therefore, the final attention mechanism unit 26 transforms the weighted feature amount map M into the feature amount vector V, and outputs the feature amount vector V to the recognition apparatus 5. The attention mechanism units 26 other than the final attention mechanism unit output the weighted feature amount map M to the subsequent convolution calculation unit 25. Further, the convolution calculation unit 25 and the attention mechanism unit 26 may be connected regularly and repeatedly, or may be connected irregularly in such a manner of convolution calculation unit 25→attention mechanism unit 26→convolution calculation unit 25→convolution calculation unit 25→···. However, the feature transformation unit 24 is not limited thereto, and may include only one set of the convolution calculation unit 25 and the attention mechanism unit 26.

The recognition apparatus 5 is, for example, a computer that recognizes a subject included in an image by using information based on the weighted feature amount map by a learned recognition model. The recognition apparatus 5 performs one or more of a process of detecting a subject included in the input image I, a process of identifying the subject, a process of tracking the subject, a process of classifying the subject, and any other recognition processing, and outputs an output value O. The recognition apparatus 5 also has a function such as a fully connected layer included in a neural network such as a convolutional neural network learned by machine learning such as deep learning.

The learning apparatus 6 is connected to the convolution calculation unit 25 and the attention mechanism unit 26 of the feature transformation unit 24 in the image processing apparatus 20 and the recognition apparatus 5, and is, for example, a computer that updates and optimizes various parameters used in processing of these elements or apparatuses by learning. The learning apparatus 6 inputs learning data to the first convolution calculation unit 25 of the feature transformation unit 24, and performs a learning process of updating various parameters based on a difference between the output value O output from the recognition apparatus 5 and a ground truth label. Then, the learning apparatus 6 outputs the optimized various parameters to the convolution calculation unit 25, the attention mechanism unit 26, and the recognition apparatus 5. In the present second example embodiment, the learning apparatus 6 includes a learning database (not shown) that stores learning data. However, the present embodiment is not limited thereto, and the learning database may be included in another apparatus (not shown) that is communicably connected to the learning apparatus 6.

Further, the image processing apparatus 20, the recognition apparatus 5, and the learning apparatus 6 may be formed from a plurality of computers, or may be formed from a single computer. In the case of being formed from the plurality of computers, the apparatuses may be communicably connected to each other through various networks such as the Internet, a wide area network (WAN), and a local area network (LAN).

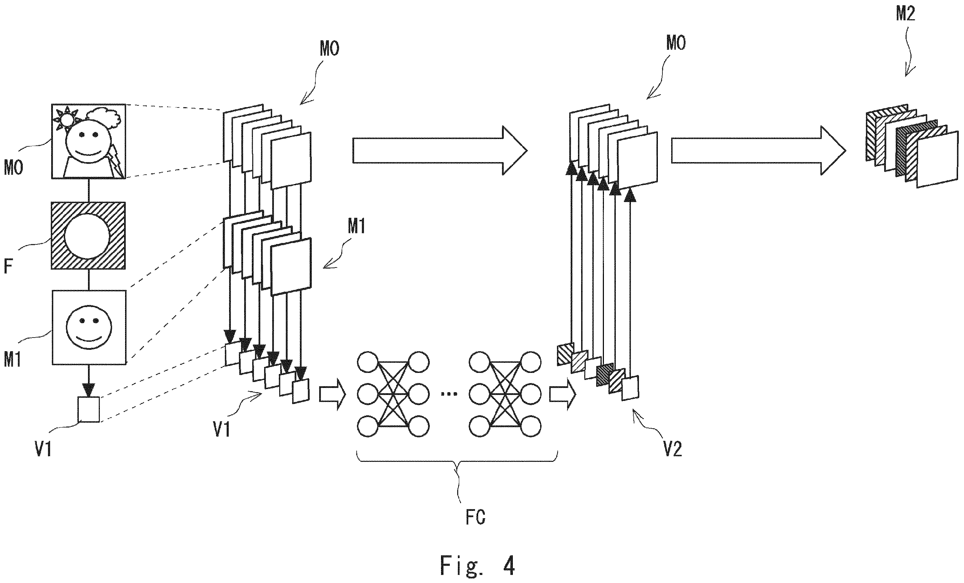

Next, Fig. 4 is a diagram for describing an outline of processing of the attention mechanism unit 26 according to the second example embodiment.

First, the attention mechanism unit 26 acquires a plurality of feature amount maps M (M0) from the convolution calculation unit 25. Each of the feature amount maps M0 is an H×W matrix, and the plurality of feature amount maps M0 are represented by a C×H×W third-order tensor (each of C, H, and W is a natural number). Here, H indicates the number of pixels in a vertical direction of each of the feature amount maps M, and W indicates the number of pixels in a horizontal direction of each of the feature amount maps M. Further, C indicates the number of channels.

Next, the attention mechanism unit 26 generates a plurality of feature amount maps M1 from the plurality of feature amount maps M0 by using an extraction filter F. The plurality of feature amount maps M1 may be represented by a C×H×W third-order tensor. In addition, the extraction filter F is a filter used to extract an extraction target region in the feature amount maps M0. The extraction target region is a pixel region corresponding to a region of interest included in the input image I or the normalized image. Here, the region of interest may be a region of the subject included in the normalized image or a region of a part of the subject. Further, the region of interest may be a region of a part of the subject included in the normalized image. For example, when the subject is a face of a person, the region of interest may be a partial region such as eyes, nose, or mouth. In the present second example embodiment, the extraction filter F may be a filter that removes a pixel region other than the extraction target region. As an example, the extraction filter F may be a filter that remove a pixel region corresponding to a region, for example, a background included in the normalized image, other than the subject. At this time, the extraction filter F may have a scale equal to the feature amount map M0 of one channel. In other words, the extraction filter F may be an H×W matrix.

Then, the attention mechanism unit 26 generates a feature amount vector V1 having a value corresponding to each of the plurality of feature amount maps M1 as a component. Here, the number of dimensions of the feature amount vector V1 is C.

The attention mechanism unit 26 calculates an attention weight corresponding to each component of the feature amount vector V1 using a fully connected layer FC, and generates a feature amount vector V2 having the attention weight as a component. Here, the number of dimensions of the feature amount vector V2 is C.

Then, the attention mechanism unit 26 generates, for each of the plurality of feature amount maps M0, a plurality of feature amount maps M2 weighted with the attention weight corresponding to the feature amount map M0. The plurality of feature amount maps M2 may be represented by a C×H×W third-order tensor.

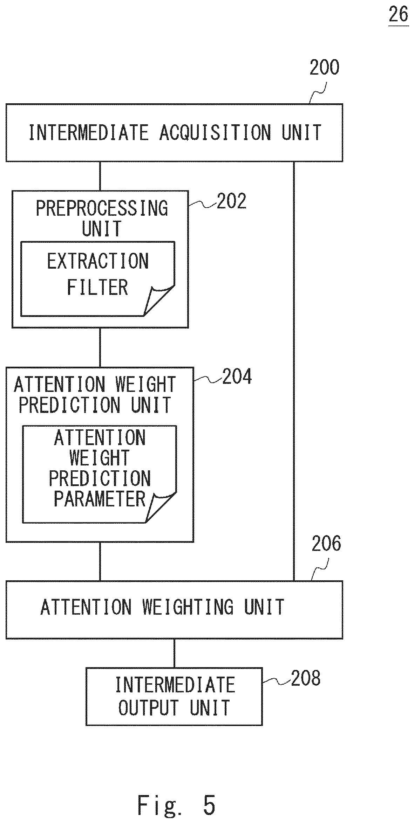

The configuration of the attention mechanism unit 26, which performs such processing, will be described with reference to Fig. 5. Fig. 5 is a block diagram showing the configuration of the attention mechanism unit 26 according to the second example embodiment. The attention mechanism unit 26 includes an intermediate acquisition unit 200, a preprocessing unit 202, an attention weight prediction unit 204, an attention weighting unit 206, and an intermediate output unit 208.

The intermediate acquisition unit 200 acquires the plurality of feature amount maps M0 output from the convolution calculation unit 25. The intermediate acquisition unit 200 outputs the acquired plurality of feature amount maps M0 to the preprocessing unit 202.

The preprocessing unit 202 performs a weighting calculation on a pixel value for each of the acquired plurality of feature amount maps M0, and generates a plurality of feature amount maps M1. In the present second example embodiment, the preprocessing unit 202 performs the weighting calculation using the extraction filter F. Then, the preprocessing unit 202 calculates a statistical value of the weighted pixel value for each of the plurality of feature amount maps M1, and generates a feature amount vector V1. Here, the statistical value may be a mean value, a median value, or a mode value. Then, the preprocessing unit 202 outputs the feature amount vector V1 to the attention weight prediction unit 204.

The attention weight prediction unit 204 predicts an attention weight indicating an importance level for each of the plurality of feature amount maps M1 from a statistical value of a pixel value corresponding to each of the plurality of feature amount maps M1, and generates a feature amount vector V2. In the present second example embodiment, the statistical value of the pixel value corresponding to each of the plurality of feature amount maps M1 is also the statistical value of the pixel value corresponding to each of the plurality of feature amount maps M0. Further, the attention weight indicating the importance level for each of the plurality of feature amount maps M1 also indicates the importance level for each of the plurality of feature amount maps M0. The attention weight prediction unit 204 uses an attention weight prediction model that predicts the attention weight. The attention weight prediction model has a fully connected layer FC including attention weight prediction parameters. The attention weight prediction parameters are parameters optimized by the learning apparatus 6 and output from the learning apparatus 6. The attention weight prediction unit 204 outputs the feature amount vector V2 to the attention weighting unit 206.

The attention weighting unit 206 performs weighting on each of the plurality of feature amount maps M0 acquired by the intermediate acquisition unit 200 by using the attention weight included in the feature amount vector V2. Then, the attention weighting unit 206 generates a plurality of weighted feature amount maps M2, and outputs the plurality of feature amount maps M2 to the intermediate output unit 208.

The intermediate output unit 208 outputs the plurality of feature amount maps M2 to a subsequent element.

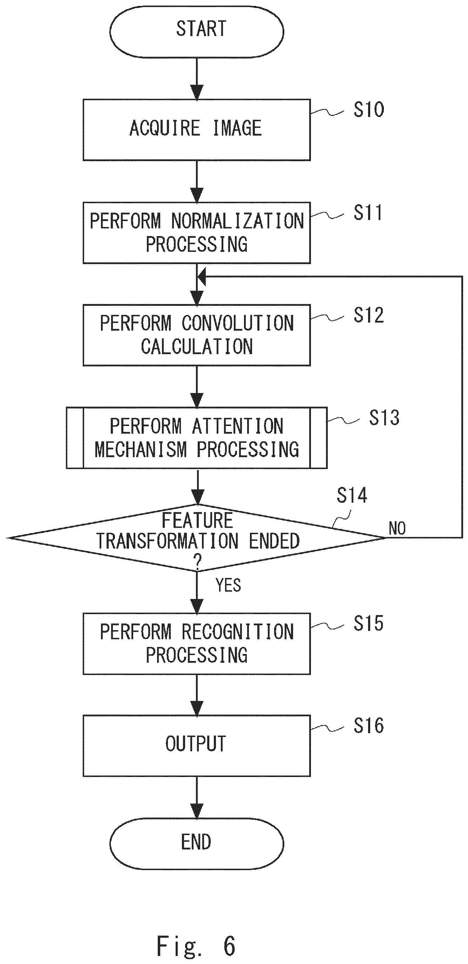

Fig. 6 is a flowchart showing the processing of the image recognition system 1 according to the second example embodiment.

First, in S10, the image acquisition unit 22 of the image processing apparatus 20 acquires an input image I. The image acquisition unit 22 outputs the acquired input image I to the normalization unit 23.

Next, in S11, the normalization unit 23 detects a position of a subject included in the input image I, and generates a normalized image in which the subject is normalized based on the detected position. In the present second example embodiment, the normalization unit 23 detects a position of a face of a person who is the subject in the input image I, and calculates the number of pixels corresponding to vertical and horizontal lengths of the detected face. Then, the normalization unit 23 normalizes the face in the image based on the number of vertical and horizontal pixels of the image and the number of vertical and horizontal pixels of the face. Instead of this, the normalization unit 23 may detect a representative position of the subject, and an image obtained by cutting out the region in a predetermined range with respect to the representative position of the subject may be referred to as a normalized image. The normalization unit 23 outputs the normalized image to the first convolution calculation unit 25 of the feature transformation unit 24.

Next, in S12, the convolution calculation unit 25 acquires parameters of the convolution calculation from the learning apparatus 6, and performs the convolution calculation on the normalized image by using the parameters. Thus, the convolution calculation unit 25 generates a plurality of feature amount maps M0. The convolution calculation unit 25 outputs the plurality of feature amount maps M0 to the attention mechanism unit 26.

Next, in S13, the attention mechanism unit 26 performs attention mechanism processing, and generates a plurality of feature amount maps M2. Details of the attention mechanism processing will be described below.

Next, in S14, the attention mechanism unit 26 determines whether to end the convolution calculation shown in S12 and the attention mechanism processing shown in S13. When it is determined that the above processing is ended (Yes in S14), the attention mechanism unit 26 outputs the plurality of feature amount maps M2 to the recognition apparatus 5, and the process proceeds to S15. When it is not determined the above processing is not ended (No in S14), the attention mechanism unit 26 outputs the plurality of feature amount maps M2 to the subsequent convolution calculation unit 25, and the process returns to S12.

In S12 after a second and subsequent time, the convolution calculation unit 25 performs the convolution calculation on the plurality of feature amount maps M2, which is output from the attention mechanism unit 26, instead of the normalized image.

In S15, the recognition apparatus 5 performs predetermined recognition processing by using information based on the plurality of feature amount maps M2. Then, the recognition apparatus 5 ends the processing.

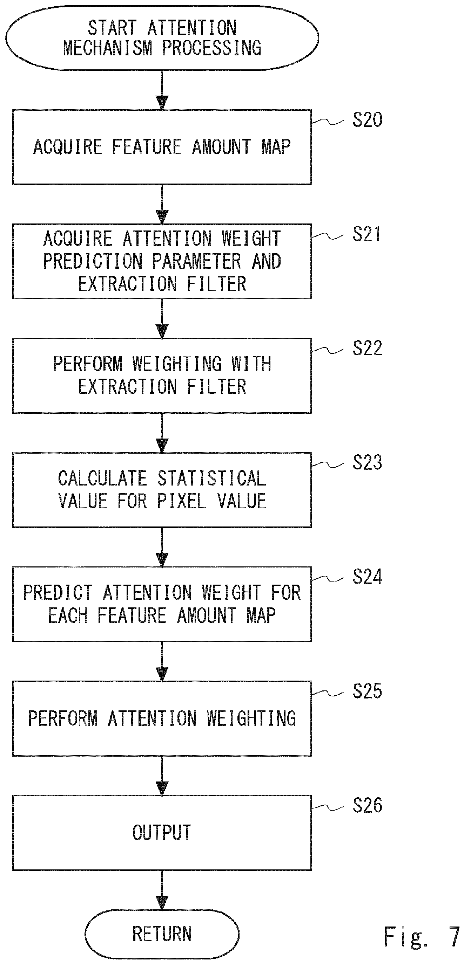

Fig. 7 is a flowchart showing the attention mechanism processing of the attention mechanism unit 26 according to the second example embodiment.

First, in S20, the intermediate acquisition unit 200 of the attention mechanism unit 26 acquires the plurality of feature amount maps M0 output from the convolution calculation unit 25. The intermediate acquisition unit 200 outputs the acquired plurality of feature amount maps M0 to the preprocessing unit 202 and the attention weighting unit 206.

Next, in S21, the intermediate acquisition unit 200 acquires an extraction filter F, and outputs it to the preprocessing unit 202. Specifically, the intermediate acquisition unit 200 acquires a filter weight, which is a pixel value of each pixel included in the extraction filter F, for all pixels included in the extraction filter F, and outputs it to the preprocessing unit 202. Further, the intermediate acquisition unit 200 acquires the attention weight prediction parameter of the attention weight prediction model from the learning apparatus 6, and outputs the attention weight prediction parameter to the attention weight prediction unit 204.

Next, in S22, the preprocessing unit 202 applies the extraction filter F to each of the plurality of feature amount maps M0, and performs a weighting calculation on the pixel value of each of the pixels included in each of the plurality of feature amount maps M0. In other words, the preprocessing unit 202 multiplies the pixel value at each pixel position included in each of the plurality of feature amount maps M0 by the pixel value, which is included in the extraction filter F, at the pixel position corresponding to the forementioned pixel position. Thus, the preprocessing unit 202 generates a plurality of feature amount maps M1.

Next, in S23, the preprocessing unit 202 calculates, for each of the plurality of feature amount maps M1, statistical values for all the pixel values included in the feature amount maps M1. The preprocessing unit 202 generates a feature amount vector V1 having the statistical value corresponding to each of the feature amount maps M1 as a component. Then, the preprocessing unit 202 outputs the feature amount vector V1 to the attention weight prediction unit 204.

Next, in S24, the attention weight prediction unit 204 predicts the attention weight for each of the feature amount maps M1 from the feature amount vector V1 by using the attention weight prediction model including the attention weight prediction parameter. The attention weight prediction unit 204 generates a feature amount vector V2 having each attention weight as a component, and outputs the feature amount vector V2 to the attention weighting unit 206.

Next, in S25, the attention weighting unit 206 weights each of the feature amount maps M0 output from the intermediate acquisition unit 200 with the corresponding component (attention weight) of the feature amount vector V2. Then, the attention weighting unit 206 generates a plurality of feature amount maps M2, and outputs the plurality of feature amount maps M2 to the intermediate output unit 208.

Next, in S26, the intermediate output unit 208 outputs the feature amount map M2 to the subsequent element. At this time, when the attention mechanism unit 26 is the final attention mechanism unit 26 of the feature transformation unit 24, the intermediate output unit 208 transforms the feature amount map M2 into a vector, and generates a feature amount vector V. Then, the intermediate output unit 208 outputs the feature amount vector V to the recognition apparatus 5.

As described above, according to the second example embodiment, the attention mechanism unit 26 of the image processing apparatus 20 performs the weighting calculation of the pixel value on each of the plurality of feature amount maps M0 before predicting the attention weight by using the attention mechanism algorithm. Therefore, it is possible to reduce the influence of unnecessary information on the prediction of the attention weight. Thus, it is possible to generate the feature amount maps M2 with high accuracy while preventing an increase in calculation costs of the attention weight prediction processing. Then, as a result, it is possible to improve the recognition accuracy while preventing an increase in calculation costs of the subsequent recognition processing.

Further, the attention mechanism unit 26 uses the extraction filter F, which is used to extract the extraction target region corresponding to the region of interest, for the weighting calculation of the pixel value. Therefore, the attention mechanism unit 26 can generate the feature amount map M2 with accuracy matching the purpose by using the extraction filter F according to the purpose, and can obtain the recognition accuracy matching the purpose.

Further, since the attention mechanism unit 26 uses the attention weight to perform the weighting on the feature amount map M0 before the extraction filter F is applied, it is possible to prevent the influence of the region other than the region of interest from being excessively excluded.

In the present second example embodiment, the preprocessing unit 202 applies the same extraction filter F to each of the plurality of feature amount maps M0 in S22. However, the present embodiment is not limited thereto, and the preprocessing unit 202 may have a plurality of different extraction filters F according to types of the acquired plurality of feature amount maps M0, and may perform a weighting calculation on each of the acquired plurality of feature amount maps by using the corresponding extraction filter F. For example, among the plurality of feature amount maps M0, the preprocessing unit 202 may apply the extraction filter F having a nose region of the normalized image as a region of interest to the feature amount map M0 in which the convolution calculation is performed such that the features of the nose of the face are extracted by the convolution calculation unit 25. Here, a pixel position of the region of interest of the normalized image may be determined in advance according to the type of the region of interest (for example, eyes, nose, or mouth). Then, a pixel position of the extraction target region in the feature amount map M0 may be calculated in advance based on the pixel position of the region of interest.

In this case, the preprocessing unit 202 can select a preferred extraction filter F according to the features extracted by the convolution calculation unit 25, and apply it to each of the feature amount maps M0. Therefore, the attention mechanism unit 26 can calculate the attention weight with high accuracy more efficiently.

In S22 and S23, the preprocessing unit 202 may perform the weighting calculation and the calculation of the statistical value of the pixel value in parallel without generating the feature amount maps M1. Further, the preprocessing unit 202 may perform predetermined weighting such as weighting averaging on each of the feature amount maps M0 without using the extraction filter F.

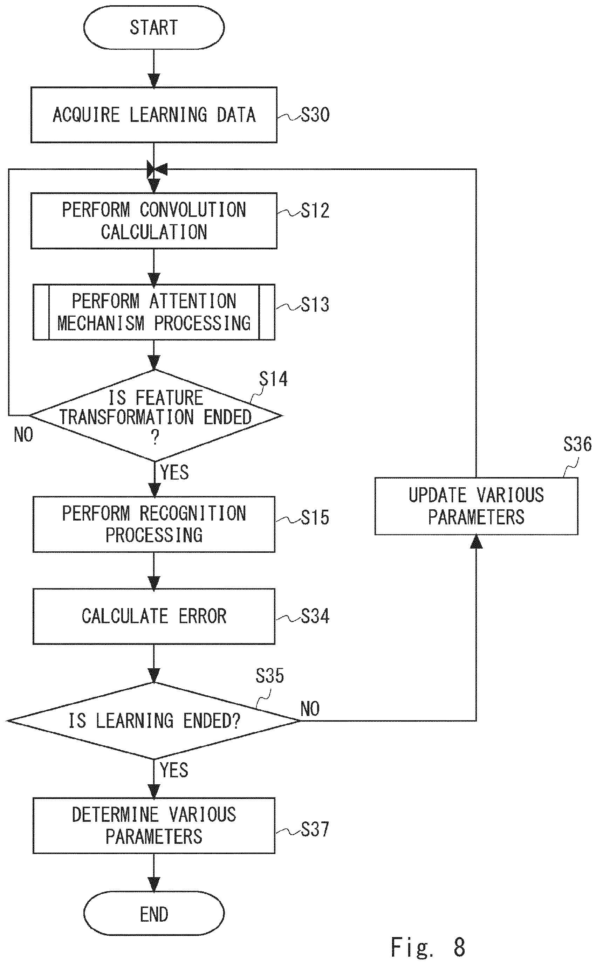

Fig. 8 is a flowchart showing the learning process of the learning apparatus 6 according to the second example embodiment. The same steps as those shown in Fig. 6 are denoted by the same symbols and will not be described.

First, in S30, the learning apparatus 6 acquires a large amount of learning data from the learning database (not shown). As an example, the learning data may be a data set including an image and a ground truth label indicating the classification of the subject of the image. Here, the image of the learning data may be a normalized image that has been normalized in advance. Further, when cross-validation is performed, the learning data may be classified into training data and test data. The learning apparatus 6 inputs the image included in the learning data to the first convolution calculation unit 25 of the feature transformation unit 24 of the image processing apparatus 20, and the process proceeds to S12.

In S34, the learning apparatus 6 calculates an error between the output value O and the ground truth label of the learning data according to the recognition processing performed by the recognition apparatus 5 in S15.

Next, in S35, the learning apparatus 6 determined whether to end the learning. In the present second example embodiment, the learning apparatus 6 may determine whether to end the learning by determining whether the number of updates has reached a preset number of times. Further, the learning apparatus 6 may determine whether to end the learning by determining whether the error is less than a predetermined threshold value. When the learning apparatus 6 determines that the learning is ended (Yes in S35), the process proceeds to S37, and if not (No in S35), the process proceeds to S36.

In S36, the learning apparatus 6 updates various parameters used in the convolution calculation of the convolution calculation unit 25, the attention weight prediction model of the attention mechanism unit 26, and the recognition model of the recognition apparatus 5 based on the calculated error. The learning apparatus 6 may update various parameters by using a backpropagation method, which is an example. Then, the learning apparatus 6 returns the process to S12.

In S37, the learning apparatus 6 determines various parameters. Then, the learning apparatus 6 ends the process.

As described above, the learning apparatus 6 used the machine learning to optimize the parameters of the convolution calculation, the parameters of the attention weight prediction model, and the parameters of the recognition model.

Although the second example embodiment has been described above, when the image recognition system 1 is a system that authenticates a subject by biometric authentication, the image recognition system 1 may include a feature amount database that stores the feature amount of the subject. The feature amount database may be connected to the image processing apparatus 20 and the recognition apparatus 5. At this time, in the registration of the feature amount, when the final attention mechanism unit 26 ends the attention mechanism processing (Y in S14) in S14 shown in Fig. 6, the intermediate output unit 208 may store, in place of S26 shown in Fig. 7, the feature amount vector V in the feature amount database in place of the recognition apparatus 5. At this time, steps S15 and S16 shown in Fig. 6 may be omitted.

### (Third Example Embodiment)

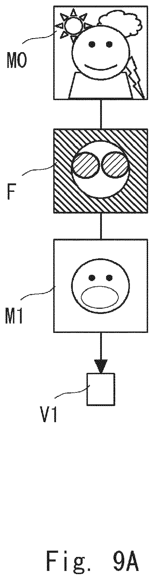

A third example embodiment of the present disclosure will be described below with reference to Figs. 9A to 9C. The third example embodiment is characterized in that an extraction filter F weights an extraction target region corresponding to a region of interest according to an attention level of the region of interest. Further, the attention level indicates a degree of attention for the region of interest. An image recognition system 1 according to the third example embodiment has basically the same configuration and function as the image recognition system 1 according to the second example embodiment, and thus differences will be described. Figs. 9A to 9C are views showing examples of extraction filters F according to the third example embodiment.

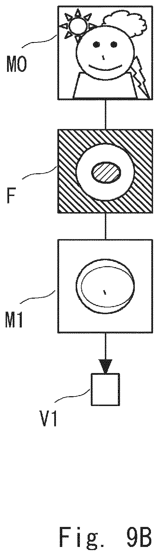

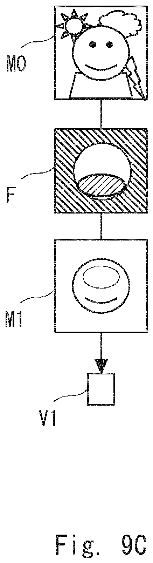

As shown in Figs. 9A to 9C, in the extraction filters F, the extraction target region corresponding to the region of interest of the subject (here, the face) having a high attention level among pixels in the feature amount map M0 may be weighted with a filter weight having a large value. On the other hand, in the extraction filters F, the extraction target region corresponding to another region of interest of the subject may be weighted with a filter weight having a small value. Further, in the extraction filters F, a pixel region corresponding to the background other than the subject may be removed. Further, Figs. 9A, 9B, and 9C show examples in which region of interests having high attention level are eyes, nose, and mouth, respectively.

As described above, according to the third example embodiment, the attention mechanism unit 26 can generate the feature amount map M2 with the accuracy according to the purpose by using the extraction filter F matching the purpose. Therefore, the recognition accuracy of the subsequent recognition apparatus 5 is improved.

Further, since the attention mechanism unit 26 can be weighted with the filter weight according to the attention level of each pixel of the feature amount map M0, it is possible to prevent the influence of the region other than the region of interest from being excessively excluded.

### (Fourth Example Embodiment)

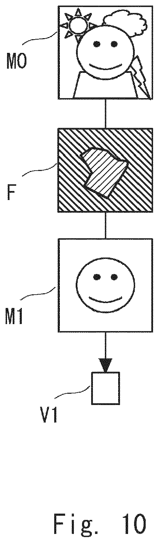

A fourth example embodiment of the present disclosure will be described below with reference to Fig. 10. The region of interest in the third example embodiment is a region that can be specified by the user in advance, but the region of interest specified by the user may not be an optimum region in the recognition processing. Fig. 10 is a view showing an example of an extraction filter F according to the fourth example embodiment. A solid line inside the extraction filter F shown in this drawing indicates a contour line of the filter weight. As shown in this drawing, the contour line has a complicated shape.

The fourth example embodiment is characterized in that the filter weight, which is a pixel value of a pixel included in the extraction filter F, is a filter weight learned by machine learning as a parameter. Here, the parameter is referred to as a filter weight parameter. Further, an image recognition system 1 according to the fourth example embodiment has basically the same configuration and function as the image recognition system 1 according to the second and third example embodiments, and thus differences will be described below.

First, instead of S21 shown in Fig. 7, the intermediate acquisition unit 200 acquires the extraction filter F from the learning apparatus 6, and outputs it to the preprocessing unit 202. At this time, the intermediate acquisition unit 200 acquires learned filter weight parameters of the extraction filter F from the learning apparatus 6 with respect to all pixels included in the extraction filter F, and outputs it to the preprocessing unit 202. Further, the intermediate acquisition unit 200 acquires attention weight prediction parameters of an attention weight prediction model from the learning apparatus 6, and outputs the attention weight prediction parameters to the attention weight prediction unit 204.

Instead of S36 shown in Fig. 8, the learning apparatus 6 updates the filter weight parameter in addition to various parameters used in the convolution calculation, the attention weight prediction model, and the recognition model, based on the calculated error. The learning apparatus 6 may update these parameters by using a backpropagation method, for example. Then, the learning apparatus 6 returns the process to S12.

Instead of S37 shown in Fig. 8, the learning apparatus 6 determines the filter weight parameter in addition to various parameters used in the convolution calculation, the attention weight prediction model, and the recognition model. Then, the learning apparatus 6 ends the process.

As described above, according to the fourth example embodiment, each of the plurality of pixels included in the extraction filter F includes the learned filter weight optimized by the machine learning. The attention mechanism unit 26 can generate the feature amount map M2 with high accuracy by using such an extraction filter F. Therefore, the recognition accuracy of the subsequent recognition apparatus 5 is improved.

### (Fifth Example Embodiment)

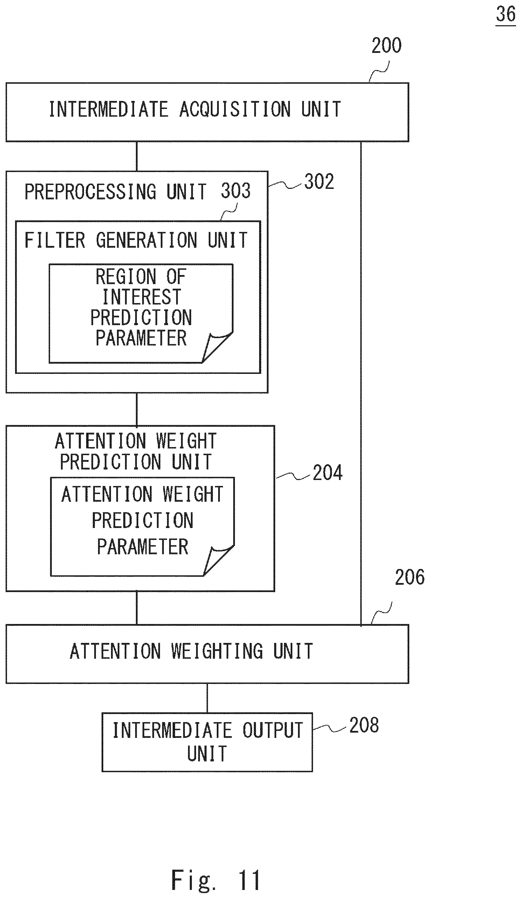

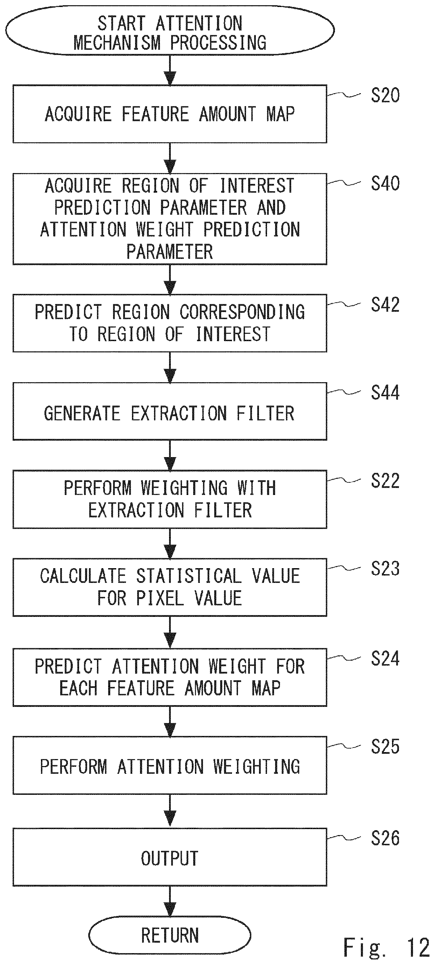

A fifth example embodiment of the present disclosure will be described below with reference to Figs. 11 and 12. Since a region of interest differs depending on an input image I or a normalized image, an extraction filter F is preferably generated according to the input image I or the normalized image. The fifth example embodiment is characterized in that different pixel values, that is, weights are assigned to each of pixels of the extraction filter F according to the input image I.

Fig. 11 is a block diagram showing a configuration of an attention mechanism unit 36 according to the fifth example embodiment. The attention mechanism unit 36 is, for example, a computer having basically the same configuration and function as the attention mechanism unit 26 of the second and third example embodiments. However, the attention mechanism unit 36 is different from the attention mechanism unit 26 in that a preprocessing unit 302 is provided in place of the preprocessing unit 202.

The preprocessing unit 302 includes a filter generation unit 303 in addition to the configuration and function of the preprocessing unit 202.

The filter generation unit 303 generates an extraction filter F by using the learned region of interest prediction model used to predict an extraction target region corresponding to the region of interest according to the input image I or the normalized image. Here, the region of interest prediction model may include a convolutional layer and a fully connected layer including region of interest prediction parameters.

Further, the preprocessing unit 302 uses the generated extraction filter F to perform a weighting calculation on each of a plurality of feature amount maps M0.

Fig. 12 is a flowchart showing attention mechanism processing of the attention mechanism unit 36 according to the fifth example embodiment. Steps shown in Fig. 12 include S40 to 44 in place of S21 shown in Fig. 7. The same steps as those shown in Fig. 7 are denoted by the same symbols, and will not be described.

In S40, the intermediate acquisition unit 200 acquires a region of interest prediction parameter of the region of interest prediction model and an attention weight prediction parameter of the attention weight prediction model from the learning apparatus 6. The intermediate acquisition unit 200 outputs the region of interest prediction parameter to the filter generation unit 303, and outputs the attention weight prediction parameter to the attention weight prediction unit 204.

In S42, the filter generation unit 303 inputs the feature amount map M0 to the region of interest prediction model including the acquired target region prediction parameter, and predicts an extraction target region corresponding to the region of interest in the feature amount map M0. At this time, the filter generation unit 303 may also predict a weight of the extraction target region corresponding to the region of interest, that is, a pixel value corresponding to the extraction target region in the extraction filter F.

In S44, the filter generation unit 303 generates an extraction filter F in which a weight is applied to each pixel according to the attention level, based on the prediction result.

Then, in S22, the preprocessing unit 302 uses the generated extraction filter F to perform a weighting calculation.

As described above, according to the fifth example embodiment, the attention mechanism unit 36 generates the extraction filter F according to the input image I or the normalized image in the attention mechanism processing, and thus extraction accuracy of the extraction target region corresponding to the region of interest is improved. Thus, the attention mechanism unit 36 can predict the attention weight with high accuracy and generate the feature amount map M2 with high accuracy.

In the above-described first to fifth example embodiments, a computer is formed from a computer system including a personal computer, a word processor, etc. The computer is not limited thereto and may be formed from a Local Area Network (LAN) server, a host of computer (personal computer) communications and a computer system connected on the Internet, etc. Further, functions may be distributed over respective devices on the network and the entire network can constitute the computer.

The present disclosure has been described as a hardware configuration in the above-described first to fifth example embodiments, the present disclosure is not limited thereto. The present disclosure can also be realized by causing a processor 1010, which will be described below, to execute a computer program for various kinds of processing such as the normalizing processing, the convolution calculation processing, the attention mechanism processing, the recognition processing, and the learning process described above.

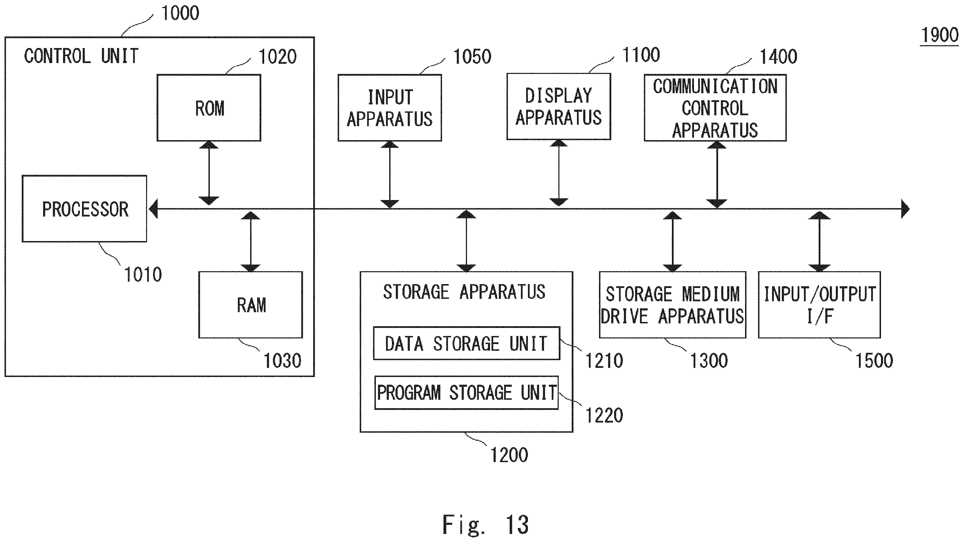

Fig. 13 is one example of a configuration diagram of a computer 1900 according to the first to fifth example embodiments. As shown in Fig. 13, the computer 1900 includes a control unit 1000 for controlling the entire system. An input apparatus 1050, a storage apparatus 1200, a storage medium drive apparatus 1300, a communication control apparatus 1400, and an input/output I/F 1500 are connected to the control unit 1000 via a bus line such as a data bus.

The control unit 1000 includes a processor 1010, a ROM 1020, and a RAM 1030.

The processor 1010 performs various information processing and control according to programs stored in various storage units such as the ROM 1020 and the storage apparatus 1200.

The ROM 1020 is a read-only memory that stores, in advance, various programs and data for causing the processor 1010 to perform various kinds of control and calculations.

The RAM 1030 is a RAM that is used as a working memory by the processor 1010. This RAM 1030 may be provided with various areas for performing various kinds of processing according to the first to fifth example embodiments.

The input apparatus 1050 is an apparatus such as a keyboard, a mouse, and a touch panel that accepts input from a user. Various keys such as a numeric keypad, a function key for executing various functions, a cursor key and the like are, for example, arranged in the keyboard. The mouse, which is a pointing device, is an input apparatus that specifies a corresponding function by clicking a key, an icon or the like displayed on a display apparatus 1100. The touch panel, which is an input apparatus that is provided on the surface of the display apparatus 1100, specifies a touch position by a user that corresponds to various operation keys displayed on the screen of the display apparatus 1100 and accepts input of an operation key displayed corresponding to the touch position.

The display apparatus 1100 may be, for example, a CRT or a liquid crystal display. The display apparatus is configured to display results of input by a keyboard or a mouse or image information that has been finally searched. The display apparatus 1100 further displays an image of an operation key for performing various kinds of necessary operations from the touch panel in accordance with various functions of the computer 1900.

The storage apparatus 1200 is formed from a readable/writable storage medium and a drive apparatus for reading/writing various kinds of information such as programs and data from/into the storage medium.

The storage medium used in the storage apparatus 1200 is mainly a hard disc or the like, but a non-transitory computer-readable medium used in the storage medium drive apparatus 1300 to be described below may be used.

The storage apparatus 1200 includes a data storage unit 1210, a program storage unit 1220, and another storage unit that is not shown (for example, a storage unit for backing up programs and data stored in the storage apparatus 1200). The program storage unit 1220 stores programs for implementing various kinds of processing in the first to fifth example embodiments. The data storage unit 1210 stores various kinds of data of various databases in the first to fifth example embodiments.

The storage medium drive apparatus 1300 is a drive apparatus for allowing the processor 1010 to read data or the like including computer programs or documents from storage media existing in the outside (external storage media).

The external storage media here indicate non-transitory computer-readable media storing computer programs, data and the like. The non-transitory computer-readable media include various types of tangible storage media. Examples of non-transitory computer-readable media include magnetic storage media (such as flexible disks, magnetic tapes, hard disk drives), optical magnetic storage media (for example, magneto-optical disks), a CD-Read Only Memory (ROM), CD-R, CD-R/W, and semiconductor memories (such as mask ROM, Programmable ROM (PROM), Erasable PROM (EPROM), flash ROM, random access memory (RAM)). The various programs may be provided to a computer by using any type of transitory computer-readable media. Examples of transitory computer readable media include electric signals, optical signals, and electromagnetic waves. Transitory computer readable media can provide various programs to a computer via a wired communication line (for example, electric wires, and optical fibers) or a wireless communication line and the storage medium drive apparatus 1300.

In other words, in the computer 1900, the processor 1010 of the control unit 1000 reads various programs from external storage media set in the storage medium drive apparatus 1300 and stores the read programs in the respective parts of the storage apparatus 1200.

In order to execute various kinds of processing, the computer 1900 is configured to read a corresponding program from the storage apparatus 1200 into the RAM 1030 and thereby execute the read program. Alternatively, the computer 1900 is also able to directly read the program into the RAM 1030 from an external storage medium by the storage medium drive apparatus 1300, not from the storage apparatus 1200, thereby executing the read program. Further, in some computers, various programs and the like, which are stored in the ROM 1020 in advance, may be executed by the processor 1010. Further, the computer 1900 may download various programs and data from other storage media via a communication control apparatus 1400, thereby executing the downloaded programs or data.

The communication control apparatus 1400 is a control apparatus for connecting between the computer 1900 and various external electronic devices such as another personal computer or a word processor by a network. The communication control apparatus 1400 allows access from these various external electronic devices to the computer 1900.

The input/output I/F 1500 is an interface for connecting various input/output apparatuses via a parallel port, a serial port, a keyboard port, a mouse port or the like.

As the processor 1010, a Central Processing Unit (CPU), a Graphics Processing Unit (GPU), a field-programmable gate array (FPGA), a digital signal processor (DSP), an application specific integrated circuit (ASIC) and the like may be used.

Each process performed by the system and the method shown in the claims, specifications, or diagrams can be performed in any order as long as the order is not indicated by "prior to," "before," or the like and as long as the output from a previous process is not used in a later process. Even if the process flow in the claims, specifications, or diagrams is described using phrases such as "first" or "next" for convenience, it does not necessarily mean that the process must be performed in this order.

Although the present disclosure has been described above with reference to example embodiments, the present disclosure is not limited to the above-described example embodiments. Various changes can be made to the configurations and the details of the present disclosure without departing from the scope of the present invention as long as a person skilled in the art can understand.

### Reference Signs List

- 1: IMAGE RECOGNITION SYSTEM
- 5: RECOGNITION APPARATUS
- 6: LEARNING APPARATUS
- 10, 20: IMAGE PROCESSING APPARATUS
- 22: IMAGE ACQUISITION UNIT
- 23: NORMALIZATION UNIT
- 24: FEATURE TRANSFORMATION UNIT
- 25: CONVOLUTION CALCULATION UNIT
- 26, 36: ATTENTION MECHANISM UNIT
- 100, 200: INTERMEDIATE ACQUISITION UNIT
- 102, 202, 302: PREPROCESSING UNIT
- 104, 204: ATTENTION WEIGHT PREDICTION UNIT
- 106, 206: ATTENTION WEIGHTING UNIT
- 208: INTERMEDIATE OUTPUT UNIT
- 303: FILTER GENERATION UNIT
- 1000: CONTROL UNIT
- 1010: PROCESSOR
- 1020: ROM
- 1030: RAM
- 1050: INPUT APPARATUS
- 1100: DISPLAY APPARATUS
- 1200: STORAGE APPARATUS
- 1210: DATA STORAGE UNIT
- 1220: PROGRAM STORAGE UNIT
- 1300: STORAGE MEDIUM DRIVE APPARATUS
- 1400: COMMUNICATION CONTROL APPARATUS
- 1500: INPUT/OUTPUT I/F
- 1900: COMPUTER
- I: INPUT IMAGE
- O: OUTPUT VALUE
- M: FEATURE AMOUNT MAP
- M0: FEATURE AMOUNT MAP
- M1: FEATURE AMOUNT MAP
- M2: FEATURE AMOUNT MAP
- V: FEATURE AMOUNT VECTOR
- V1: FEATURE AMOUNT VECTOR
- V2: FEATURE AMOUNT VECTOR
- FC: FULLY CONNECTED LAYER
- F: EXTRACTION FILTER

## Claims

1. An image processing apparatus comprising:
an intermediate acquisition unit that acquires feature amount maps representing a feature of an image;
a preprocessing unit that performs a weighting calculation regarding a pixel value on each of the acquired feature amount maps and calculates a statistical value of the weighted pixel value for each of the feature amount maps;
an attention weight prediction unit that predicts an attention weight indicating an importance level for each of the feature amount maps from the statistical value of the pixel value corresponding to each of the feature amount maps; and
an attention weighting unit that performs weighting on each of the acquired feature amount maps by using the attention weight.

2. The image processing apparatus according to claim 1, wherein
the preprocessing unit performs the weighting calculation on each of the acquired feature amount maps by using a filter for extracting a pixel region corresponding to a region of interest of the image.

3. The image processing apparatus according to claim 1 or 2, wherein
the preprocessing unit performs the weighting calculation on each of the acquired feature amount maps by using a filter for weighting a pixel region corresponding to a region of interest with a weight according to an attention level of the region of interest of the image.

4. The image processing apparatus according to claim 2 or 3, wherein
each of a plurality of pixels in the filter includes a learned filter weight optimized by machine learning.

5. The image processing apparatus according to claim 2 or 3, wherein
the preprocessing unit further includes a filter generation unit that generates the filter by using a learned region of interest prediction model used to predict a pixel region corresponding to the region of interest according to the image.

6. The image processing apparatus according to any one of claims 2 to 5, wherein
the preprocessing unit includes a plurality of different filters according to types of the acquired feature amount maps, and performs a weighting calculation on each of the acquired feature amount maps by using a corresponding filter.

7. An image recognition system comprising:
an image processing apparatus including: an intermediate acquisition unit that acquires feature amount maps representing a feature of an image; a preprocessing unit that performs a weighting calculation regarding a pixel value on each of the acquired feature amount maps and calculates a statistical value of the weighted pixel value for each of the feature amount maps; an attention weight prediction unit that predicts an attention weight indicating an importance level for each of the feature amount maps from the statistical value of the pixel value corresponding to each of the feature amount maps; and an attention weighting unit that performs weighting on each of the feature amount maps acquired by the intermediate acquisition unit by using the attention weight; and
a recognition apparatus that recognizes a subject in the image by using information based on the weighted feature amount maps by a learned recognition model.

8. The image recognition system according to claim 7, further comprising
a learning apparatus that uses machine learning to optimize a parameter of an attention weight prediction model used to predict the attention weight and a parameter of the recognition model.

9. An image processing method comprising:
acquiring feature amount maps representing a feature of an image;
performing a weighting calculation regarding a pixel value on each of the acquired feature amount maps and calculating a statistical value of the weighted pixel value for each of the feature amount maps;
predicting an attention weight indicating an importance level for each of the feature amount maps from the statistical value of the pixel value corresponding to each of the feature amount maps; and
performing weighting on each of the acquired feature amount maps by using the attention weight.

10. A non-transitory computer-readable medium that stores an image processing program for causing a computer to implement:
an intermediate acquisition function to acquire feature amount maps representing a feature of an image;
a preprocessing function to perform a weighting calculation regarding a pixel value on each of the acquired feature amount maps and to calculate a statistical value of the weighted pixel value for each of the feature amount maps;
an attention weight prediction function to predict an attention weight indicating an importance level for each of the feature amount maps from the statistical value of the pixel value corresponding to each of the feature amount maps; and
an attention weighting function to perform weighting on each of the acquired feature amount maps by using the attention weight.
